# EUROPEAN PATENT SPECIFICATION

(11) **EP 2 900 843 B1**
(45) Date of publication and mention of the grant of the patent: **31.01.2018**
(21) Application number: 13770759.2
(22) Date of filing: 16.09.2013
(51) Int. Cl.: C23C 18/12, B01J 37/02, B01J 21/06, B01J 23/06, B01J 23/14, B01D 53/88, B01J 35/02, B01J 23/42, B01J 23/70

(54) **COATABLE COMPOSITION, PHOTOCATALYTIC ARTICLES, AND METHODS OF MAKING THE SAME**
BESCHICHTUNGSZUSAMMENSETZUNG, FOTOKATALYTISCHER ARTIKEL UND VERFAHREN ZUR HERSTELLUNG DAVON
COMPOSITION DE REVÊTEMENT, ARTICLES PHOTOCATALYTIQUES, ET LEURS PROCÉDÉS DE FABRICATION

(30) Priority: 26.09.2012 US 201261705935 P
(43) Date of publication of application: 05.08.2015
(73) Proprietor: 3M Innovative Properties Company, St. Paul, MN 55133-3427 (US)
(72) Inventor: SUN, Fuxia, Saint Paul, Minnesota 55133-3427 (US); JING, Naiyong, Saint Paul, Minnesota 55133-3427 (US); CHEN, Xue-hua, Shanghai 200336 (CN)
(74) Representative: Herzog, Fiesser & Partner Patentanwälte PartG mbB
(86) International application number: PCT/US2013/059941
(87) International publication number: WO 2014/052074

(56) References cited:
- WO-A1-03/070638
- WO-A1-2010/114700
- WO-A1-2010/124403
- WO-A1-2014/008383
- WO-A2-2013/020972
- US-A1- 2010 092 765
- MARINA NIETO-SUÁREZ ET AL: "Self-assembled titania-silica-sepiolite based nanocomposites for water decontamination", JOURNAL OF MATERIALS CHEMISTRY, vol. 19, no. 14, 1 January 2009 (2009-01-01), pages 2070-2075, XP055047719, ISSN: 0959-9428, DOI: 10.1039/b813864h
- PILAR ARANDA ET AL: "Titania-Sepiolite Nanocomposites Prepared by a Surfactant Templating Colloidal Route", CHEMISTRY OF MATERIALS, vol. 20, no. 1, 1 January 2008 (2008-01-01), pages 84-91, XP055047735, ISSN: 0897-4756, DOI: 10.1021/cm702251f

## Description

### TECHNICAL FIELD

The present disclosure relates broadly to articles with photocatalytic properties, compositions that form photocatalytic coatings, and methods for making the same.

### BACKGROUND

Photocatalytic oxidation (PCO) of organic materials such as fingerprints, organic environmental pollutants, and microbes can be carried out by exposing crystalline titanium dioxide coating to ultraviolet light. This process creates hydroxyl radicals and super-oxide ions, which are highly reactive species that are capable of oxidizing organic material (e.g., into carbon dioxide and water).

Titanium dioxide (titania, TiO₂) exists in three crystalline modifications: rutile, anatase, and brookite. The photoactivity of TiO₂ is well-understood. Compared with rutile and brookite, anatase shows the highest photocatalytic activity.

### SUMMARY

In one aspect, the present disclosure provides a method of making a coatable composition, the method comprising:
providing a first composition comprising silica nanoparticles dispersed in an aqueous liquid vehicle, wherein the silica nanoparticles have an average particle size of less than or equal to 100 nanometers, wherein the first composition has a pH greater than 8;
acidifying the first composition to a pH of less than or equal to 4 using inorganic acid to provide a second composition; and
dissolving at least one metal compound in the second composition to form the coatable composition, wherein said at least one metal compound comprises a titanium compound.

Coatable compositions according to the present disclosure are useful, for example, for making photocatalytic articles.

Accordingly, in yet another aspect, the present disclosure provides a method of making a photocatalytic article, the method comprising steps:
a) providing a first composition comprising silica nanoparticles dispersed in an aqueous liquid vehicle, wherein the silica nanoparticles have an average particle size of less than or equal to 100 nanometers, wherein the first composition has a pH greater than 8;
b) acidifying the composition to a pH of less than or equal to 4 using inorganic acid to provide a second composition; and
c) dissolving at least one compound of a metal in the second composition to provide a coatable composition, wherein said at least one metal compound comprises a titanium compound; and
d) coating a layer of the coatable composition onto a surface of a substrate; and
e) at least partially drying the coatable composition to provide a photocatalytic layer.

In yet another aspect, the present disclosure provides a photocatalytic article made according to the foregoing method of the present disclosure.

In yet another aspect, the present disclosure provides a photocatalytic composition comprising an amorphous silica matrix containing titanium cations, wherein the amorphous silica matrix comprises interconnected silica nanoparticles having a particle size distribution with an average particle size of less than or equal to 100 nanometers, wherein a majority of the titanium cations are individually disposed in the amorphous silica matrix, and wherein the titanium metal cations comprise from 0.2 to 40 mole percent of the total combined moles of silicon and titanium cations.

In yet another aspect, the present disclosure provides a photocatalytic article comprising a layer of an amorphous photocatalytic composition disposed on a surface of a substrate, wherein the amorphous photocatalytic composition comprises a silica matrix containing titanium cations, wherein the silica matrix comprises interconnected silica nanoparticles having a particle size distribution with an average particle size of less than or equal to 100 nanometers, wherein a majority of the titanium cations are individually disposed in the silica matrix, and wherein the titanium cations comprise from 0.2 to 40 mole percent of the total combined moles of silicon and titanium cations.

Advantageously, photocatalytic compositions, and articles including them, according to the present disclosure have self-cleaning properties when exposed to light.

Silica matrixes referred to herein may be amorphous or partially amorphous.

As used herein:
the term "dispersion of silica nanoparticles" refers to a dispersion wherein individual silica nanoparticles are dispersed, and does not refer to a dispersion of fumed silica, which has sintered primary silica particles aggregated into chains;
the term "essentially free of " means containing less than one by percent by weight of, typically less than 0.1 percent by weight of, and more typically less than 0.01 percent by weight of;
the term "essentially free of non-volatile organic compounds" means containing less than one percent by weight of organic compounds having a boiling point above 150° Celsius at 1 atmosphere (100 kPa) of pressure;
the term "individually disposed in the amorphous silica matrix" in reference to metal cations means that the metal cations are bound through oxygen to silicon, and are not present as a discrete metal phase;
the term "nanoparticle" refers to a particle having a particle size of from 1 to 200 nanometers;
the term "organic compound" refers to any compound containing at least one carbon-carbon and/or carbon-hydrogen bond;
the term "photocatalytic" means capable of catalytically oxidizing organic material in the presence of ultraviolet light;
the term "metal cation" refers to a metal ion having a charge of at least 2+; and
the term "silica", used in reference to silica nanoparticles and silica sols, refers to a compound represented by the formula SiO₂·nH₂O, wherein n is a number greater than or equal to zero.

Features and advantages of the present disclosure will be further understood upon consideration of the detailed description as well as the appended claims.

### BRIEF DESCRIPTION OF THE DRAWINGS

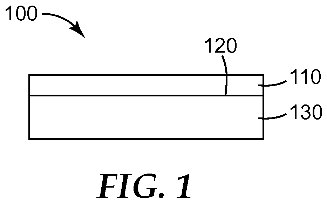

FIG. 1 is a schematic side view of an exemplary photocatalytic article 100 according to the present disclosure.

The figure may not be drawn to scale.

### DETAILED DESCRIPTION

The initial composition comprises silica nanoparticles dispersed in an aqueous liquid medium, wherein the silica nanoparticles have a particle size distribution with an average particle size of less than or equal to 100 nanometers, and wherein the initial composition has a pH greater than 8.

The silica nanoparticles have an average particle size of less than or equal to 100 nanometers (nm). In some embodiments, the silica nanoparticles have an average particle size of less than or equal to 75 nm, less than or equal to 45 nm, less than or equal to 40 nm, less than or equal to 35 nm, less than or equal to 30 nm, less than or equal to 25 nm, less than or equal to 20 nm, less than or equal to 15 nm, or even less than 10 nm. Typically, the silica nanoparticles have an average particle size of at least 4 nm, although this is not a requirement. The average primary particle size may be determined, for example, using transmission electron microscopy. As used herein, the term "particle size" refers to the longest dimension of a particle, which is the diameter for a spherical particle.

Of course, silica particles with a particle size greater than 200 nm (e.g., up to 2 micrometers in particle size) may also be included, but typically in a minor amount.

The silica nanoparticles desirably have narrow particle size distributions; for example, a polydispersity of 2.0 or less, or even 1.5 or less. In some embodiments, the silica nanoparticles have a surface area greater than 150 square meters per gram (m²/g), greater than 200 m²/g, or even greater than 400 m²/g.

In some embodiments, the amount of the silica nanoparticles having an average particle size (e.g., diameter) of 40 nm or less is at least 0.1 percent by weight, and preferably at least 0.2 percent by weight, based on the total weight of the initial composition and/or coatable composition. In some embodiments, the concentration of the silica nanoparticles having a particle size (e.g., diameter) of 40 nm or less is no greater than 20 percent by weight, or even no greater than 15 percent by weight, based on the total weight of the initial composition.

The silica nanoparticles may have a polymodal particle size distribution. For example, a polymodal particle size distribution may have a first mode with a particles size in the range of from 5 to 2000 nanometers, preferably 20 to 150 nanometers, and a second mode having a second particle size in the range of from 1 to 45 nanometers, preferably 2 to 25 nanometers.

Nanoparticles (e.g., silica nanoparticles) included in the initial composition can be spherical or non-spherical with any desired aspect ratio. Aspect ratio refers to the ratio of the average longest dimension of the nanoparticles to their average shortest dimension. The aspect ratio of non-spherical nanoparticles is often at least 2:1, at least 3:1, at least 5:1, or at least 10:1. Non-spherical nanoparticles may, for example, have the shape of rods, ellipsoids, and/or needles. The shape of the nanoparticles can be regular or irregular. The porosity of coatings can typically be varied by changing the amount of regular and irregular-shaped nanoparticles in the coatable composition and/or by changing the amount of spherical and non-spherical nanoparticles in the coatable composition.

In some embodiments, the total weight of the silica nanoparticles in the initial composition is at least 0.1 percent by weight, typically at least 1 percent by weight, and more typically at least 2 percent by weight. In some embodiments, the total weight of the silica nanoparticles in the composition is no greater than 40 percent by weight, preferably no greater than 10 percent by weight, and more typically no greater than 7 percent by weight.

Silica sols, which are stable dispersions of silica nanoparticles in aqueous liquid media, are well-known in the art and available commercially. Non-aqueous silica sols (also called silica organosols) may also be used and are silica sol dispersions wherein the liquid phase is an organic solvent, or an aqueous mixture containing an organic solvent. In the practice of this disclosure, the silica sol is chosen so that its liquid phase is compatible with the dispersion, and is typically an aqueous solvent, optionally including an organic solvent. Typically, the initial composition does not include, or is essentially, free of fumed silica, although this is not a requirement.

Silica nanoparticle dispersions (e.g., silica sols) in water or water-alcohol solutions are available commercially, for example, under such trade names as LUDOX (marketed by E. I. du Pont de Nemours and Co., Wilmington, Delaware), NYACOL (marketed by Nyacol Co., Ashland, Massachusetts), and NALCO (manufactured by Ondea Nalco Chemical Co., Oak Brook, Illinois). One useful silica sol is NALCO 2326, which is available as a silica sol with an average particle size of 5 nanometers, pH = 10.5, and solid content 15 percent solids by weight. Other commercially available silica nanoparticles include those available under the trade designations NALCO 1115 (spherical, average particle size of 4 nm, 15 percent solids by weight dispersion, pH = 10.4), NALCO 1130 spherical dispersion, average particle size of 8 nm, 30 percent solids by weight dispersion, pH = 10.2), NALCO 1050 (spherical, average particle size 20 nm, 50 percent solids by weight dispersion, pH = 9.0), NALCO 2327 (spherical, average particle size of 20 nm, 40 percent solids by weight dispersion, pH = 9.3), NALCO 1030 (spherical, average particle size of 13 nm, 30 percent solids by weight dispersion, pH = 10.2), and DVSZN004 (spherical, 45 nm, 42 percent by weight dispersion) available from Nalco Chemical Co.

Acicular silica nanoparticles may also be used provided that the average silica nanoparticle size constraints described hereinabove are achieved.

Useful acicular silica nanoparticles may be obtained as an aqueous suspension under the trade name SNOWTEX-UP by Nissan Chemical Industries (Tokyo, Japan). The mixture consists of 20-21 % (w/w) of acicular silica, less than 0.35% (w/w) of Na₂O, and water. The particles are about 9 to 15 nanometers in diameter and have lengths of 40 to 200 nanometers. The suspension has a viscosity of <100 mPa at 25°C, a pH of about 9 to 10.5, and a specific gravity of about 1.13 at 20°C.

Other useful acicular silica nanoparticles may be obtained as an aqueous suspension under the trade name SNOWTEX-PS-S and SNOWTEX-PS-M by Nissan Chemical Industries, having a morphology of a string of pearls. The mixture consists of 20-21 % (w/w) of silica, less than 0.2% (w/w) of Na₂O, and water. The SNOWTEX-PS-M particles are about 18 to 25 nanometers in diameter and have lengths of 80 to 150 nanometers. The particle size is 80 to 150 nm by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

Low- and non-aqueous silica sols (also called silica organosols) may also be used and are silica sol dispersions wherein the liquid phase is an organic solvent, or an aqueous organic solvent. In the practice of the present disclosure, the silica nanoparticle sol is chosen so that its liquid phase is compatible with the intended coating composition, and is typically aqueous or a low-aqueous organic solvent.

Silica sols having a pH of at least 8 can also be prepared according to the methods described in U.S. Patent No. 5,964,693 (Brekau et al.).

Optionally, the initial composition can further include other nanoparticles, including, for example, nanoparticles comprising aluminum oxide, titanium oxide, tin oxide, antimony oxide, antimony-doped tin oxide, indium oxide, tin-doped indium oxide, or zinc oxide.

The initial composition has a pH greater than 8, and even more typically greater than 9.

In some embodiments, the initial composition is essentially free of non-volatile organic compounds. In some embodiments, the initial composition is essentially free of organic surfactants.

The aqueous liquid medium of the initial composition may comprise (in addition to water) at least one volatile organic solvent. Examples of suitable volatile organic solvents include those volatile organic solvents that are miscible with water such as, e.g., methanol, ethanol, isopropanol, and combinations thereof. However, for many applications, reduction or elimination of volatile organic compounds will be desirable, and advantageously the present disclosure may be practiced using initial compositions and/or coatable compositions that are essentially free of volatile organic solvent.

The initial composition is acidified by addition of inorganic acid until it has a pH of less than or equal to 4, typically less than 3, or even less than 2 thereby providing the coatable composition. Useful inorganic acids (i.e., mineral acids) include, for example, hydrochloric acid, nitric acid, sulfuric acid, phosphoric acid, perchloric acid, chloric acid, and combinations thereof. Typically, the inorganic acid is selected such that it has a pKₐ of less than or equal to two, less than one, or even less than zero, although this is not a requirement. Without wishing to be bound by theory, the present inventors believe that some agglomeration of the silica nanoparticles occurs as the pH falls, resulting in a dispersion comprising agglomerated nanoparticles.

At this stage, at least one titanium compound, and optionally at least one other metal compound, is combined with (e.g., dissolved in) the acidified composition thereby providing the coatable composition, generally with mixing. Combination of the various ingredients in the above compositions may be carried out using any suitable mixing technique. Examples include stirring, shaking, and otherwise agitating the composition during or after addition of all components of the composition.

Useful titanium compounds include, for example, TiOSO₄·2H₂O, TiOSO₄·H₂SO₄·xH₂O, TiOCl₂, and TiCl₄.

Optional metal compound(s) (and any metal cations contained therein) may comprise a metal (or metal cation), other than titanium, in any of groups 2 through 15 (e.g., group 2, group 3, group 4, group 5, group 6, group 7, group 8, group 9, group 10, group 11, group 12, group 13, group 14, group 15, and combinations thereof) of the Periodic Table of the Elements.

Optional other metal cations contained in the metal compound(s) may have a charge of n+, wherein n represents an integer ≥ 2 (e.g., 2, 3, 4, 5, or 6), for example. The metal compounds should have sufficient solubility in water to achieve the desired level of metal incorporation in the resultant soil-resistant composition. For example, the metal compound(s) may comprise metal salt(s). Examples of useful metal compounds include copper compounds (e.g., CuCl₂ or Cu(NO₃)₂), platinum compounds (e.g., H₂PtCl₆), aluminum compounds (e.g., Al(NO₃)₃·9H₂O), zirconium compounds (e.g., ZrCl₄ or ZrOCl₂·8H₂O), zinc compounds (e.g. Zn(NO₃)₂·6H₂O), iron compounds (e.g., FeCl₃·6H₂O or FeCl₂), tin compounds (e.g., SnCl₂ and SnCl₄·SH₂O), and combinations thereof.

Coatable compositions according to the present disclosure may further comprise one or more optional additives such as, for example, colorant(s), surfactant(s), thickener(s), thixotrope(s), or leveling aid(s).

In some embodiments, the coatable composition may comprise an added surfactant, however, the inventors have unexpected discovered that coatable compositions according to the present disclosure wet out at least some hydrophobic surfaces without added surfactant.

The solids in the coatable composition may comprise from 30 to 99 percent by weight of silica, desirably from 60 to 97.5 percent by weight of silica, more desirably from 80 to 95 percent by weight of silica, although other amounts may also be used.

Similarly, the coatable composition may comprise from 0.2 to 40 mole percent by of metal ions contained in the metal compound(s) based on the total combined moles of silicon and metal ions (including titanium compounds and optional non-titanium metal cations, preferably from 0.5 to 25 mole percent by of metal ions, more preferably from 1.0 to 20.0 percent by weight of metal ions, although other amounts may also be used.

Once made, the coating composition is typically stable over long periods of time, over a range of temperatures, although this is not a requirement. The coating composition may be coated onto a substrate and at least partially dried, typically substantially completely dried.

Without wishing to be bound by theory, the present inventors believe that during the drying process, condensation processes lead to chemical bonding between the silica nanoparticles and/or agglomerates at points of contact to form a silica matrix. metal cations may be individually incorporated into the silica matrix, resulting in an amorphous composition.

The coatable composition can be contacted with a surface of a substrate and at least partially dried to form a photocatalytic coated article. Unexpectedly, the present inventors have discovered that coatable compositions according to the present disclosure can be contacted with a surface of a substrate and at least partially dried to provide a defect-free layer with unexpected photocatalytic properties, even though anatase titania does not appear to be present. Suitable methods of drying the coatable composition include, for example, evaporation in air at about room temperature, ovens, heated air blowers, infrared heaters, and hot cans. Drying is typically carried out until the coatable composition is substantially completely dry, although this is not a requirement. Once contacted with the substrate and at least partially dried, the photocatalytic layer may be aged for a period of time such as for example, at least 1 hour (hr), at least 4 hrs, at least 8 hrs, at least 24 hrs, at least 72 hrs, at least 1 week, or even at least 2 weeks, during which time the soil-resistance of the photocatalytic layer may improve.

Referring now to FIG. 1, photocatalytic article 100 comprises photocatalytic layer 110 disposed on surface 120 of substrate 130. Examples of suitable methods of contact the coatable composition with the surface of the substrate include roll coating, spray coating, gravure coating, dip coating, and curtain coating. Typically, the photocatalytic layer has a thickness in the range of from 0.02 to 100 microns, preferably 0.05 to 10.0 microns, although this is not a requirement.

Typically, photocatalytic layers according to the present disclosure are at least substantially transparent; however, this is not a requirement.
Examples of suitable substrates include virtually any dimensionally-stable material. Examples include glass substrates (e.g., mirrors, windows, windshields, tables, lenses, and prisms), metal substrates, ceramic substrates, organic polymer substrates (e.g., molded polymer articles, automotive paints and clearcoats, polymer films, retroreflective sheeting, indoor signage, and outdoor signage), and fabric (e.g., upholstery fabric). In some embodiments, the substrate comprises at least one of glass or an organic polymer. In some embodiments, the organic polymer comprises at least one of a polyester (e.g., polyethylene terephthalate or polybutylene terephthalate), polycarbonate, allyldiglycol carbonate, acrylics (e.g., polymethyl methacrylate (PMMA)), polystyrene, polysulfone, polyether sulfone, homo-epoxy polymers, epoxy addition polymers with polydiamines and/or polydithiols, polyamides (e.g., nylon 6 and nylon 6,6), polyimides, polyolefins (e.g., polyethylene and polypropylene), olefinic copolymers (e.g., polyethylene copolymers), and cellulose esters (e.g., cellulose acetate and cellulose butyrate), and combinations thereof.

### SELECT EMBODIMENTS OF THE PRESENT DISCLOSURE

In a first embodiment, the present disclosure provides a method of making a coatable composition, the method comprising:
providing a first composition comprising silica nanoparticles dispersed in an aqueous liquid vehicle, wherein the silica nanoparticles have an average particle size of less than or equal to 100 nanometers, wherein the first composition has a pH greater than 8;
acidifying the first composition to a pH of less than or equal to 4 using inorganic acid to provide a second composition; and
dissolving at least one metal compound in the second composition to form the coatable composition, wherein said at least one metal compound comprises a titanium compound.

In a second embodiment, the present disclosure provides a method according to the first embodiment, wherein the silica nanoparticles have an average particle size of less than or equal to 50 nanometers.

In a third embodiment, the present disclosure provides a method according to the first or second embodiment, wherein the at least one metal compound further comprises a zinc compound.

In a fourth embodiment, the present disclosure provides a method according to any one of the first to third embodiments, wherein the at least one metal compound further comprises a tin compound.

In a fifth embodiment, the present disclosure provides a method according to any one of the first to fourth embodiments, wherein the coatable composition is essentially free of organic non-volatile compounds.

In a sixth embodiment, the present disclosure provides a method according to any one of the first to fifth embodiments, wherein the first composition further comprises polymer particles dispersed in the aqueous liquid vehicle.

In a seventh embodiment, the present disclosure provides a coatable composition made according to the method of any one of the first to sixth embodiments,

In an eighth embodiment, the present disclosure provides a method of making a photocatalytic article, the method comprising steps:
a) providing a first composition comprising silica nanoparticles dispersed in an aqueous liquid vehicle, wherein the silica nanoparticles have an average particle size of less than or equal to 100 nanometers, wherein the first composition has a pH greater than 8;
b) acidifying the composition to a pH of less than or equal to 4 using inorganic acid to provide a second composition; and
c) dissolving at least one compound of a metal in the second composition to provide a coatable composition, wherein said at least one metal compound comprises a titanium compound; and
d) coating a layer of the coatable composition onto a surface of a substrate; and
e) at least partially drying the coatable composition to provide a photocatalytic layer.

In a ninth embodiment, the present disclosure provides a method according to the eighth embodiment, wherein the silica nanoparticles have an average particle size of less than or equal to 50 nanometers.

In a tenth embodiment, the present disclosure provides a method according to the eighth or ninth embodiment, wherein the at least one metal compound further comprises a zinc compound.

In an eleventh embodiment, the present disclosure provides a method according to any one of the eighth to tenth embodiments, wherein the at least one metal compound further comprises a tin compound.

In a twelfth embodiment, the present disclosure provides a method according to any one of the eighth to eleventh embodiments, wherein the first composition further comprises polymer particles dispersed in the aqueous liquid vehicle.

In a thirteenth embodiment, the present disclosure provides a method according to any one of the eighth to twelfth embodiments, wherein the substrate comprises glass or organic polymer.

In a fourteenth embodiment, the present disclosure provides a method according to any one of the eighth to thirteenth embodiments, wherein the organic polymer comprises at least one of polyethylene terephthalate or polymethyl methacrylate.

In a fifteenth embodiment, the present disclosure provides a method according to any one of the eighth to fourteenth embodiments, wherein the photocatalytic layer is optically clear.

In a sixteenth embodiment, the present disclosure provides a method according to any one of the eighth to fifteenth embodiments, wherein the photocatalytic layer has a thickness in a range of from 0.02 to 100 microns.

In a seventeenth embodiment, the present disclosure provides a method according to any one of the eighth to sixteenth embodiments, wherein the inorganic acid has a pKₐ of less than or equal to zero.

In an eighteenth embodiment, the present disclosure provides a method according to any one of the eighth to seventeenth embodiments, wherein step b) comprises acidifying the first composition to a pH of less than or equal to 2.

In a nineteenth embodiment, the present disclosure provides a method according to any one of the eighth to eighteenth embodiments, wherein the coatable composition is essentially free of organic non-volatile compounds.

In a twentieth embodiment, the present disclosure provides a photocatalytic article made according to the method of any one of the eighth to nineteenth embodiments.

In a twenty-first embodiment, the present disclosure provides a photocatalytic article according to the twentieth embodiment, wherein the photocatalytic article comprises retroreflective sheeting.

In a twenty-second embodiment, the present disclosure provides a photocatalytic composition comprising an amorphous silica matrix containing titanium cations, wherein the amorphous silica matrix comprises interconnected silica nanoparticles having a particle size distribution with an average particle size of less than or equal to 100 nanometers, wherein a majority of the titanium cations are individually disposed in the amorphous silica matrix, and wherein the titanium metal cations comprise from 0.2 to 40 mole percent of the total combined moles of silicon and titanium cations.

In a twenty-third embodiment, the present disclosure provides a photocatalytic composition according to the twenty-second embodiment, wherein the amorphous silica matrix contain further contains metal cations selected from the group consisting of copper compounds, platinum compounds, zinc compounds, iron compounds, tin compounds, and combinations thereof.

In a twenty-fourth embodiment, the present disclosure provides a photocatalytic composition according to the twenty-second or twenty-third embodiment, wherein the silica nanoparticles have an average particle size of less than or equal to 50 nanometers.

In a twenty-fifth embodiment, the present disclosure provides a photocatalytic composition according to any one of the twenty-second to twenty-fourth embodiments, wherein the silica nanoparticles have an average particle size of less than or equal to 25 nanometers.

In a twenty-sixth embodiment, the present disclosure provides a photocatalytic composition according to any one of the twenty-second to twenty-fifth embodiments, wherein the photocatalytic composition is essentially free of organic non-volatile compounds.

In a twenty-seventh embodiment, the present disclosure provides a photocatalytic article comprising a layer of an amorphous photocatalytic composition disposed on a surface of a substrate, wherein the amorphous photocatalytic composition comprises a silica matrix containing titanium cations, wherein the silica matrix comprises interconnected silica nanoparticles having a particle size distribution with an average particle size of less than or equal to 100 nanometers, wherein a majority of the titanium cations are individually disposed in the silica matrix, and wherein the titanium cations comprise from 0.2 to 40 mole percent of the total combined moles of silicon and titanium cations.

In a twenty-eighth embodiment, the present disclosure provides a photocatalytic article according to the twenty-seventh embodiment, wherein the amorphous silica matrix further contains metal cations selected from the group consisting of copper compounds, platinum compounds, zinc compounds, iron compounds, tin compounds, and combinations thereof.

In a twenty-ninth embodiment, the present disclosure provides a photocatalytic article according to the twenty-seventh or twenty-eighth embodiment, wherein the silica nanoparticles have an average particle size of less than or equal to 50 nanometers.

In a thirtieth embodiment, the present disclosure provides a photocatalytic article according to any one of the twenty-seventh to twenty-ninth embodiments, wherein the silica nanoparticles have an average particle size of less than or equal to 25 nanometers.

In a thirty-first embodiment, the present disclosure provides a photocatalytic article according to any one of the twenty-seventh to thirtieth embodiments, wherein the substrate comprises glass or an organic polymer.

In a thirty-second embodiment, the present disclosure provides a photocatalytic article according to any one of the twenty-seventh to thirty-first embodiments, wherein the organic polymer comprises at least one of polymethyl methacrylate or polyethylene terephthalate.

In a thirty-third embodiment, the present disclosure provides a photocatalytic article according to any one of the twenty-seventh to thirty-second embodiments, wherein the photocatalytic layer is optically clear.

In a thirty-fourth embodiment, the present disclosure provides a photocatalytic article according to any one of the twenty-seventh to thirty-third embodiments, wherein the photocatalytic layer has a thickness in a range of from 0.02 to 100 microns.

In a thirty-fifth embodiment, the present disclosure provides a photocatalytic article according to any one of the twenty-seventh to thirty-fourth embodiments, wherein the coatable composition is essentially free of organic non-volatile compounds.

In a thirty-sixth embodiment, the present disclosure provides a photocatalytic article according to any one of the twenty-seventh to thirty-fifth embodiments, wherein the substrate comprises retroreflective sheeting.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples are by weight. In the Examples, "%T" means percent transmission, "%H" means percent haze, "minute(s)" is abbreviated as "min", and "hour(s)" is abbreviated as "hr(s)".

### MATERIALS:

NALCO 1115 (4 nm), NALCO 1050 (20 nm), and NALCO DVSZN004 (45 nm) colloidal silicas were obtained from Nalco Chemical Company, Naperville, Illinois under the respective trade designations NALCO 1115, NALCO 1050, and NALCO DVSZN004 colloidal silica.

Polyethylene terephthalate (PET) film (50 micrometers thick) was obtained from E.I. du Pont de Nemours, Wilmington, Delaware, under the trade designation MELINEX 618.

Soda-lime glass slides were obtained from VWR international, West Chester, Pennsylvania, and SOLITE glass was obtained from Swift Glass Inc., Elmira Heights, New York. These glass slides were pre-treated by gentle scrubbing with ALCONOX cleanser from VWR International, and subsequently washed thoroughly with deionized water before use.

TiOSO₄·2H₂O was obtained from NOAH Technologies Corporation, San Antonio, Texas.

Zn(NO₃)₂·6H₂O was obtained from Mallinckrodt Baker, Inc., Phillipsburg, New Jersey.

Cu(NO₃)₂·3H₂O was obtained from Morton Thiokol Inc., Danvers, Massachusetts.

SnCl₄·5H₂O was obtained from Sigma-Aldrich Co., Saint Louis, Missouri.

Methylene blue was obtained from Mallinckrodt Inc., Paris, Kentucky.

### COATING PROCEDURE FOR GLASS AND PLASTIC SUBSTRATES

Coated samples were created by coating the dispersion solutions using either a dip coater at a drawing speed of 242.6 mm/min or a #6 wire-wound coating rod from R D Specialties, Webster, New York, nominal wet coating thickness = 14 microns. The dry coating thickness was about 100 nm to 300 nm. For the glass substrate, the coated samples were heated at 120°C for 10 minutes, and then heated at a temperature of from 300°C to 700°C for 2 minutes, as indicated. For PET substrate, the coated samples were heated at 120°C for 10 minutes.

### PROCEDURE FOR COATING METHYLENE BLUE ON GLASS SUBSTRATE

Methylene blue was dissolved in deionized water and diluted to 1 mg/ml. Methylene blue solution was coated onto silica and titanium-modified silica coated surfaces on glass substrates using a dip coater at a drawing speed of 242.6 mm/min.

### PROCEDURE FOR COATING METHYLENE BLUE ON PET FILM SUBSTRATE

Methylene blue was dissolved in deionized water and diluted to a concentration of 1 milligram/milliliter (mg/mL). The methylene blue solution was coated onto silica and titanium-modified silica coated surfaces on PET substrates using a #6 wire-wound coating rod.

### UV LAMP CHAMBERS USED FOR PHOTOCATALYTIC TESTING

UV CHAMBER A: The UV lamp chamber with a spectral output maximum at 365 nm was a Rayonet chamber reactor, model RPR-100 equipped with sixteen low pressure mercury bulbs available from The Southern New England Ultraviolet, Inc. of New Haven, Connecticut. Samples to be irradiated were placed centrally in the photoreactor.

UV CHAMBER B: The UV lamp chamber with a spectral output maximum 254 nm was a planar bank of 6 germicidal lamps (Philips TUV G15T8 germicidal bulb, low-pressure mercury, 15 W, 254 nm, marketed by Royal Philips Electronics, Amsterdam, The Netherlands) spaced apart on 3-inch (7.6 -cm) centers. The sample was placed in a position to 3 inches (7.6 cm) distance to the germicidal lamps.

### PHOTOCATALYTIC DEGRADATION TEST OF METHYLENE BLUE

Coated glass slides or PET films were in the indicated UV lamp chamber for photocatalytic performance tests (above). The irradiation time was from 15 minutes to 5 hours, as indicated.

### TRANSMISSION, HAZE AND ABSORBANCE MEASUREMENTS

Transmission and haze measurements were made using a HAZE-GUARD *PLUS* purchased from BYK-Gardner USA (Columbia, MD, USA). The transmission and absorbance at wavelengths from 300 nm to 900 nm were performed using a UV-Vis spectrometer from PerkinElmer Inc., Waltham, Massachusetts, USA).

### COATING SOL UTION PREPARATION:

Acidified silica nanoparticle dispersion: Colloidal silica(s) NALCO 1115, NALCO 1050, and NALCO DVSZN004 were diluted to 10 to 3 weight percent with deionized water and acidified with concentrated aqueous HNO₃ to pH=2.0 to 3.0 individually.

Acidified mixed silica nanoparticle dispersion: Colloidal silica(s) NALCO 1115, NALCO 1050, and NALCO DVSZN004 were diluted to with deionized water, and mixed in desired ratios. Subsequently, solution mixtures were acidified to pH = 2 - 3. The desired amounts of metal compounds were added to the silica solutions.

### TITANIUM -MODIFIED SILICA COATING SOLUTION PREPARATION

Titanium-modified silica coating solutions were prepared by adding an aqueous solution of TiOSO₄·2H₂O to the acidified silica nanoparticle solution suspensions.

### COMPARATIVE EXAMPLE A

NALCO 1115 (4 nm) and NALCO 1050 (20 nm) were diluted to 10 weight percent with deionized water, individually. They were mixed in a respective weight ratio of 3:7, and then the resulting dispersion was acidified to pH = 2-3 using HNO₃. The acidified-dispersion was coated using a #6 wire-wound coating rod on flashlamp-treated PET film. The coated samples were heated at 120°C for 10 minutes.

### EXAMPLE 1

Comparative Example A (2.0 g) was mixed with 0.8571 g of a 10 weight percent TiOSO₄·2H₂O solution in deionized water. The resulting acidified dispersion, which contained 29.7 weight percent of TiOSO₄·2H₂O, was coated using a #6 wire-wound coating rod on flashlamp-treated PET film. The coated samples were heated at 120°C for 10 minutes.

### EXAMPLE 2

Comparative Example A (2.0 g) was mixed with 4.6667 g of a 10 weight percent TiOSO₄·2H₂O solution in deionized water. The resulting acidified dispersion, which contained 69.3 weight percent of TiOSO₄·2H₂O, was coated using a #6 wire-wound coating rod on flashlamp-treated PET film. The coated samples were heated at 120°C for 10 minutes.

Comparative Example A and Examples 1-2 were coated with a solution of methylene blue (MB) in deionized water (1 mg/mL) using a #6 wire-wound coating rod, and dried at the room temperature. The dye coated samples were put into UV Chamber A and irradiated at 365 nm. The samples were taken out of the chamber for the measurement of percent transmission and haze every hour. The results are reported in Table 1. Results show that titanium-doped silica coatings have higher degradation rate of MB than the silica coating itself.

**TABLE 1**

| EXAMPLE | BLANK | | 0 HR | | 1 HR | | 2 HRS | | Δ%T | |
|---|---|---|---|---|---|---|---|---|---|---|
| | %T | %H | %T | %H | %T | %H | %T | %H | 1 hr | 2 hrs |
| Comp. Ex. A | 91.87 | 3.34 | 59.00 | 3.02 | 59.63 | 3.06 | 60.10 | 3.08 | 0.63 | 1.10 |
| 1 | 91.60 | 5.76 | 59.90 | 9.81 | 65.30 | 9.98 | 67.57 | 9.97 | 5.40 | 7.67 |
| 2 | 90.50 | 10.57 | 61.80 | 17.60 | 67.57 | 18.83 | 69.33 | 19.37 | 5.77 | 7.53 |

### COMPARATIVE EXAMPLE B

NALCO 1115 (4 nm) and NALCO DVSZN004 (45 nm) were diluted to 10 weight percent with deionized water, individually. They were mixed in a respective weight ratio of 1:2, and then the resulting dispersion was acidified to pH = 2-3 using HNO₃. The acidified-dispersion was coated using a #6 wire-wound coating rod on flashlamp-treated PET film. The coated samples were heated at 120°C for 10 minutes.

### EXAMPLE 3

Comparative Example B (2.0 g) was mixed with 0.8571 g of a 10 weight percent TiOSO₄·2H₂O solution in deionized water. The resulting acidified dispersion, which contained 29.7 weight percent of TiOSO₄·2H₂O, was coated using a #6 wire-wound coating rod on flashlamp-treated PET film. The coated samples were heated at 120°C for 10 minutes.

Comparative Example B and Example 3 were coated with a solution of Methylene Blue (MB) in deionized water (1 mg/mL) deionized water solution using a #6 wire-wound coating rod, and dried at the room temperature. A sample of Comparative Example B that was not coated with methylene blue was also used. The dye coated samples were put into UV Chamber A and irradiated at 365 nm. The samples were taken out of the chamber for the measurement of percent transmission and haze every hour. The results are reported in Table 2. Results show that titanium-doped silica coatings have higher degradation rate of MB than the silica coating itself.

Comparative Example B and Example 3 were coated with a solution of methylene blue (MB) in deionized water (1 mg/mL) using a #6 wire-wound coating rod, and dried at the room temperature. A sample of Comparative Example B that was not coated with methylene blue was also used. The dye coated samples were put into UV Chamber B and irradiated at 254 nm. The samples were taken out of the chamber for the measurement of percent transmission and haze every 15 minutes. The results are reported in Table 3. Results show that titanium-doped silica coatings have higher degradation rate of MB than the silica coating itself.

**TABLE 2**

| EXAMPLE | MB ABSORBANCE WAVELENGTH, nm | IRRADIATION TIME, hrs | %T | Δ%T |
|---|---|---|---|---|
| Comparative Example B | 590.69 | 0 | 92.46 | |
| Comparative Example B+MB | 596.61 | 0 | 54.78 | |
| | 594.92 | 1 | 60.51 | 5.73 |
| | 594.07 | 2 | 66.70 | 11.92 |
| | 591.53 | 3 | 73.95 | 19.17 |
| | 591.53 | 4 | 79.18 | 24.40 |
| Example 3 | 590.69 | 0 | 92.38 | |
| Example 3 + MB | 587.61 | 0 | 46.70 | |
| | 578.92 | 1 | 54.88 | 8.18 |
| | 571.22 | 2 | 68.36 | 21.66 |
| | 572.06 | 3 | 78.39 | 31.69 |
| | 591.53 | 4 | 88.64 | 41.94 |

**TABLE 3**

| EXAMPLE | MB ABSORBANCE WAVELENGTH, nm | IRRADIATION TIME, min | %T | Δ%T |
|---|---|---|---|---|
| Comparative Example B | 599.15 | 0 | 92.46 | |
| Comparative Example B+MB | 599.15 | 0 | 60.56 | |
| | 592.38 | 15 | 63.82 | 3.26 |
| | 585.60 | 30 | 74.45 | 13.89 |
| | 586.46 | 45 | 78.36 | 17.80 |
| | 589.84 | 60 | 82.97 | 22.41 |
| Example 3 | 590.69 | 0 | 92.38 | |
| Example 3 + MB | 599.15 | 0 | 75.11 | |
| | 579.05 | 15 | 75.11 | 9.03 |
| | 570.37 | 30 | 81.85 | 15.77 |
| | 577.99 | 45 | 87.65 | 21.54 |
| | 580.53 | 60 | 90.02 | 23.94 |

### EXAMPLE 4

Comparative Example B (180 grams) was mixed with 45.0 grams of TiOSO₄·2H₂O solution (10 weight percent) to obtain 10 weight percent solution dispersion containing 19.8 weight percent of TiOSO₄·2H₂O. Fifty grams of the above mixture was diluted by deionized water to 100 grams, resulting in a 5 weight percent solids dispersion. The resulting acidified dispersion solution contained 19.8 weight percent of total solids TiOSO₄•2H₂O

Three samples each of Comparative Example B and Example 4 were dip coated at a drawing speed of 242.6 mm/min on a SOLITE glass substrate. The coated samples were heated at 120°C for 10 minutes. Samples of Comparative Example B and Example 4 were further heated at 600°C for 2 minutes. Different samples of Comparative Example B and Example 4 were heated at 700°C for 2 minutes after their initial heating at 120°C for 10 minutes. The resulting six samples were coated by methylene blue (MB) with a concentration of 1 mg/mL deionized water solution using a dip coater at the same speed and dried at the room temperature.

The MB-coated samples were put in UV Chamber A. The samples were taken out from chamber for transmission measurement every hour. Results are reported in Table 4. The results indicate that the titanium-doped silica coatings have larger transmission changes than the silica coating itself after low and high temperature treatment.

**TABLE 4**

| EXAMPLE | % TRANSMISSION CHANGE (Δ%T) AT 400-800 nm WAVELENGTH | | | | | |
|---|---|---|---|---|---|---|
| | 120°C HEATING | | 600°C HEATING | | 700°C HEATING | |
| | 1 hr irradiation | 2 hrs irradiation | 1 hr irradiation | 2 hrs irradiation | 1 hr irradiation | 2 hrs irradiation |
| Comp. Ex. B | 1.6 | 3.1 | 2.6 | 3.9 | 2.2 | 3.6 |
| 4 | 2.0 | 5.3 | 5.0 | 6.7 | 3.1 | 5.4 |

### EXAMPLE 5

Comparative Example B (100 g) was mixed with 40.920 grams of TiOSO₄•2H₂O (10 weight percent in deionized water). The resulting 10 weight percent solids acidified dispersion solution contained 28.8 weight percent of total solids TiOSO₄•2H₂O.

### EXAMPLE 6

Example 5 (45 g) was mixed with 45 grams of deionized water The resulting 5 weight percent solids acidified dispersion solution contained 28.8 weight percent of total solids TiOSO₄•2H₂O.

The titanium doped silica coating samples of EXAMPLES 5-6 were created by coating the dispersion solutions EXAMPLE 5 and EXAMPLE 6 using a #6 wire-wound coating rod on the PET substrates. All the coated samples were heated at 120 °C for 10 minutes. Samples of EXAMPLE 5 and EXAMPLE 6 were further coated with a methylene blue solution in deionized water (1 mg/mL) using a #6 wire-wound coating rod and dried at the room temperature. MB-coated samples of EXAMPLE 5 and EXAMPLE 6 were put into UV Chambers A or B for photocatalytic activity testing. Samples were taken out from the chambers for transmission measurement every 15 minutes for the samples in UV Chamber B, and every one hour for the samples in UV Chamber A. Results are reported in Tables 5 and 6.

### COMPARATIVE EXAMPLE C

Comparative Example B (100 g) was mixed with 45.478 grams of Zn(NO₃)₂·6H₂O (10 weight percent in deionized water). The resulting 10 weight percent solids acidified dispersion solution contained 30.6 weight percent of total solids Zn(NO₃)₂·6H₂O.

### EXAMPLE 7

Comparative Example C (45 g) was mixed with 45 grams of deionized water The resulting 5 weight percent solids acidified dispersion solution contained 30.6 weight percent of total solids of Zn(NO₃)₂·6H₂O.

Comparative Example C and Example 7 were coated using a #6 wire-wound coating rod onto PET substrates. All the coated samples were heated at 120°C for 10 minutes. Two coated samples of Comparative Example C and two coated samples of Example 6 were further coated by a methylene blue solution in deionized water (1 mg/mL) using a #6 wire-wound coating rod, and dried at the room temperature. The MB-coated samples were put in the UV Chamber A or UV Chamber B for photocatalytic activity testing. The MB-coated samples were taken out from the chambers for transmission measurement every 15 minutes for the samples in UV Chamber B, and every one hour for the samples in UV Chamber A. Results are reported in Tables 5 and 6.

### EXAMPLE 8

Comparative Example B (100 grams) was mixed with 40.920 grams of TiOSO₄ TiOSO₄·2H₂O (10 weight percent solids in deionized water) and 22.739 grams of Zn(NO₃)₂·6H₂O (10 weight percent solids in deionized water). The resulting 10 weight percent coating solution contained TiOSO₄·2H₂O (24.7 weight percent) and Zn(NO₃)₂·6H₂O (13.6 weight percent).

### EXAMPLE 9

Example 8 (45.0 g) was diluted with 45.0 grams of deionized water. The resultant 5 weight percent solids coating solution contained 24.7 weight percent of total solids TiOSO₄·2H₂O and 13.6 weight percent of total solids Zn(NO₃)₂·6H₂O.

### EXAMPLE 10

Comparative Example B (100 g) was mixed with 40.920 grams of TiOSO₄·2H₂O (10 weight percent solids in deionized water) and 45.478 grams of Zn(NO₃)₂·6H₂O (10 weight percent solids in deionized water). The resulting 10 weight percent solids coating solution contained TiOSO₄)·2H₂O (21.7 weight percent of total solids) and Zn(NO₃)₂·6H₂O (23.9 weight percent of total solids).

### EXAMPLE 11

Example 10 (45.0 g) was diluted with 45.0 grams of deionized water. The resulting 5 weight percent solids coating solution contained TiOSO₄·2H₂O (21.7 weight percent of total solids) and Zn(NO₃)₂·6H₂O (23.9 weight percent of total solids).

Examples 8-11 were coated using a #6 wire-wound coating rod onto PET film substrates. All the coated samples were heated at 120°C for 10 minutes. Two coated samples of each of Examples 8-11 were further coated with a methylene blue (MB) solution in deionized water (1 mg/mL) using a #6 wire-wound coating rod, and dried at the room temperature.

MB-coated samples were separately put into UV Chambers A and B for photocatalytic activity testing. The coated samples were taken out from the chambers for transmission measurement every 15 minutes for the samples in UV Chamber B and every one hour for the samples in UV Chamber A. The transmission changes of the coating samples after irradiation are reported in Tables 5 (using UV Chamber B) and 6 (using UV Chamber A). The results indicate that the bimetal zinc and titanium doped silica coatings have better photocatalytic performance than only titanium doped silica coatings.

**TABLE 5**

| EXAMPLE | PERCENT SOLIDS OF COATING SOLUTION | METAL COMPOUND (weight percent of total metal compound + silica) | %T | | | Δ%T | |
|---|---|---|---|---|---|---|---|
| | | | Before irradiation | 15 min | 30 min | 15 min | 30 min |
| 5 | 10 | TiOSO₄·2H₂O (28.8) | 78.20 | 82.00 | 82.15 | 3.80 | 3.95 |
| COMP. EX. C | 10 | Zn(NO₃)₂·6H₂O (30.6) | 71.00 | 72.00 | 73.75 | 1.80 | 2.75 |
| 8 | 10 | TiOSO₄·2H₂O (24.7) | 79.70 | 83.50 | 85.05 | 3.80 | 5.35 |
| | | Zn(NO₃)₂•6H₂O (13.6) | | | | | |
| 10 | 10 | TiOSO₄·2H₂O (21.7) | 71.55 | 75.25 | 76.95 | 3.70 | 5.40 |
| | | Zn(NO₃)₂·6H₂O (23.9) | | | | | |
| 6 | 5 | TiOSO₄·2H₂O (28.8) | 77.65 | 80.35 | 80.90 | 2.70 | 3.25 |
| 7 | 5 | Zn(NO₃)₂·6H₂O (30.6) | 65.15 | 67.40 | 68.25 | 2.25 | 3.10 |
| 9 | 5 | TiOSO₄·2H₂O (24.7) | 74.2 | 77.9 | 78.1 | 3.70 | 3.90 |
| | | Zn(NO₃)₂·6H₂O (13.6) | | | | | |
| 11 | 5 | TiOSO₄·2H₂O (21.7) | 76.6 | 78.75 | 80.35 | 2.15 | 3.75 |
| | | Zn(NO₃)₂·6H₂O (23.9) | | | | | |

**TABLE 6**

| EXAMPLE | PERCENT SOLIDS OF COATING SOLUTION | METAL COMPOUND, (weight percent of total metal compound + silica) | %T | | | Δ%T | |
|---|---|---|---|---|---|---|---|
| | | | Before irradiation | 1 hr | 2 hrs | 1 hr | 2 hrs |
| 5 | 10 | TiOSO₄·2H₂O (28.8) | 79.00 | 80.80 | 81.25 | 1.80 | 2.25 |
| Comp. Ex. C | 10 | Zn(NO₃)₂·6H₂O, (30.6) | 71.25 | 72.60 | 73.65 | 1.35 | 2.40 |
| 8 | 10 | TiOSO₄·2H₂O (24.7) | 75.75 | 78.35 | 79.20 | 2.60 | 3.45 |
| | | Zn(NO₃)₂·6H₂O, (13.6) | | | | | |
| 10 | 10 | TiOSO₄·2H₂O (21.7) | 75.85 | 78.1 | 80.90 | 2.25 | 5.05 |
| | | Zn(NO₃)₂•6H₂O, (23.9) | | | | | |
| 6 | 5 | TiOSO₄•2H₂O (28.8) | 79.95 | 81.10 | 81.75 | 1.15 | 1.80 |
| 7 | 5 | Zn(NO₃)₂·6H₂O, (30.6) | 76.65 | 76.95 | 77.80 | 0.30 | 1.15 |
| 9 | 5 | TiOSO₄·2H₂O (24.7) | 77.50 | 78.30 | 79.90 | 0.80 | 2.40 |
| | | Zn(NO₃)₂•6H₂O (13.6) | | | | | |
| 11 | 5 | TiOSO₄·2H₂O (21.7) | 75.30 | 76.05 | 77.55 | 0.75 | 2.25 |
| | | Zn(NO₃)₂·6H₂O (23.9) | | | | | |

Coated samples of Comparative Examples B-C, and Examples 5-11 on soda-lime glass slides were made using a dip coater at a drawing speed of 242.6 mm/min on the regular glass substrates. All the coated samples were heated at 120°C for 10 minutes. The samples were further dip coated with a methylene blue (MB) solution in deionized water (1 mg/mL), and dried at the room temperature.

MB-coated samples were separately put into UV Chambers A and B for photocatalytic activity testing. The coated samples were taken out from the chambers for transmission measurement every 15 minutes for the samples in UV Chamber B and every one hour for the samples in UV Chamber A. The transmission changes of the coating samples after irradiation are reported in Tables 7 (using UV Chamber B) and 8 (using UV Chamber A). The results indicate that the bimetal zinc and titanium doped silica coatings have better photocatalytic performance than only titanium doped silica coatings. The results indicate that the bimetal zinc and titanium doped silica coatings on glass substrates have better photocatalytic performance than only titanium doped silica coatings.

**TABLE 7**

| EXAMPLE | PERCENT SOLIDS OF COATING SOLUTION | METAL COMPOUND, (weight percent of total metal compound + silica) | %T | | | Δ%T | |
|---|---|---|---|---|---|---|---|
| | | | Before irradiation | 15 min | 30 min | 15 min | 30 min |
| Comp. Ex. B | 10 | none | 70.20 | 71.84 | 73.05 | 1.64 | 2.85 |
| 5 | 10 | TiOSO₄·2H₂O (28.8) | 75.55 | 78.35 | 80.30 | 2.80 | 4.75 |
| Comp. Ex. C | 10 | Zn(NO₃)₂·6H₂O (30.6) | 73.20 | 75.15 | 76.50 | 1.95 | 3.30 |
| 8 | 10 | TiOSO₄·2H₂O (24.7), Zn(NO₃)₂·6H₂O (13.6) | 69.45 | 73.00 | 74.45 | 3.55 | 5.00 |
| 10 | 10 | TiOSO₄·2H₂O (21.7), Zn(NO₃)₂·6H₂O (23.9) | 70.80 | 75.65 | 77.15 | 4.85 | 6.35 |
| 6 | 5 | TiOSO₄·2H₂O (28.8) | 74.25 | 76.60 | 77.30 | 2.35 | 3.05 |
| 7 | 5 | Zn(NO₃)₂·6H₂O (30.6) | 77.70 | 79.15 | 79.95 | 1.45 | 2.25 |
| 9 | 5 | TiOSO₄·2H₂O (24.7), Zn(NO₃)₂·6H₂O (13.6) | 71.35 | 74.20 | 75.25 | 2.85 | 3.90 |
| 11 | 5 | TiOSO₄·2H₂O (21.7), Zn(NO₃)₂·6H₂O (23.9) | 76.9 | 80.10 | 80.75 | 3.20 | 3.85 |

**TABLE 8**

| EXAMPLE | PERCENT SOLIDS OF COATING SOLUTION | METAL COMPOUND, (weight percent of total metal compound + silica) | %T | | | Δ%T | |
|---|---|---|---|---|---|---|---|
| | | | Before irradiation | 1 hr | 2 hrs | 1 hr | 2 hrs |
| Comp. Ex. B | 10 | none | 59.2 | 60.4 | 62.1 | 1.2 | 2.9 |
| 5 | 10 | TiOSO₄·2H₂O (28.8) | 74.70 | 76.25 | 78.80 | 1.55 | 4.10 |
| Comp. Ex. C | 10 | Zn(NO₃)₂·6H₂O (30.6) | 73.40 | 74.70 | 77.00 | 1.30 | 3.60 |
| 8 | 10 | TiOSO₄·2H₂O (24.7), Zn(NO₃)₂·6H₂O (13.6) | 72.30 | 74.50 | 77.15 | 2.00 | 4.85 |
| 10 | 10 | TiOSO₄·2H₂O (21.7), Zn(NO₃)₂·6H₂O (23.9) | 71.00 | 73.85 | 76.10 | 2.85 | 5.10 |
| 6 | 5 | TiOSO₄·2H₂O (28.8) | 74.70 | 76.30 | 76.75 | 1.60 | 2.05 |
| 7 | 5 | Zn(NO₃)₂·6H₂O (30.6) | 76.40 | 77.55 | 78.30 | 1.15 | 1.90 |
| 9 | 5 | TiOSO₄·2H₂O (24.7), Zn(NO₃)₂·6H₂O (13.6) | 74.50 | 76.30 | 77.10 | 1.80 | 2.60 |
| 11 | 5 | TiOSO₄·2H₂O (21.7), Zn(NO₃)₂·6H₂O (23.9) | 76.40 | 77.80 | 78.30 | 1.40 | 1.90 |

Coated samples of Comparative Example C, and Examples 5, 8, and 10 on soda-lime glass slides were made using a dip coater at a drawing speed of 242.6 mm/min on the soda-lime glass substrates. All the coated samples were heated at 120°C for 10 minutes, then at 700°C for 2 minutes. The coated samples were further dip coated with a methylene blue (MB) solution in deionized water (1 mg/mL), and dried at the room temperature.

The MB-coated samples were separately put into UV Chambers A and B for photocatalytic activity testing. The coated samples were taken out from the chambers for transmission measurement every 15 minutes for the samples in UV Chamber B and every one hour for the samples in UV Chamber A. The transmission changes of the coating samples after irradiation are reported in Tables 9 (using UV Chamber B) and 10 (using UV Chamber A). The results indicate that the bimetal zinc and titanium doped silica coatings have better photocatalytic performance than only titanium doped silica coatings. The results indicate that the zinc/titanium-doped silica coatings on glass substrates have better photocatalytic performance than only titanium-doped silica coatings after high temperature treatment at 700°C.

**TABLE 9**

| EXAMPLE | PERCENT SOLIDS OF COATING SOLUTION | METAL COMPOUND, (weight percent of total metal compound + silica) | %T | | | Δ%T | |
|---|---|---|---|---|---|---|---|
| | | | Before irradiation | 15 min. | 30 min. | 15 min. | 30 min. |
| 5 | 10 | TiOSO₄·2H₂O (28.8) | 69.05 | 70.15 | 71.10 | 1.10 | 2.05 |
| Comp. Ex. C | 10 | Zn(NO₃)₂·6H₂O (30.6) | 84.30 | 84.35 | 84.60 | 0.05 | 0.3 |
| 8 | 10 | TiOSO₄·2H₂O (24.7), Zn(NO₃)₂·6H₂O (13.6) | 70.00 | 71.70 | 73.15 | 1.70 | 3.15 |
| 10 | 10 | TiOSO₄·2H₂O (21.7), Zn(NO₃)₂·6H₂O (23.9) | 81.20 | 81.85 | 82.40 | 0.65 | 1.20 |

**TABLE 10**

| EXAMPLE | PERCENT SOLIDS OF COATING SOLUTION | METAL COMPOUND, (weight percent of total metal compound + silica) | %T | | | Δ%T | |
|---|---|---|---|---|---|---|---|
| | | | Before irradiation | 1 hr | 2 hrs | 1 hr | 2 hrs |
| 5 | 10 | TiOSO₄·2H₂O (28.8) | 62.60 | 66.55 | 69.90 | 3.95 | 7.30 |
| Comp. Ex. C | 10 | Zn(NO₃)₂·6H₂O (30.6) | 84.45 | 85.55 | 86.00 | 1.10 | 1.55 |
| 8 | 10 | TiOSO₄·2H₂O (24.7), Zn(NO₃)₂·6H₂O (13.6) | 68.4 | 73.20 | 76.65 | 4.80 | 8.25 |
| 10 | 10 | TiOSO₄·2H₂O (21.7), Zn(NO₃)₂·6H₂O (23.9) | 81.70 | 83.35 | 83.95 | 1.65 | 2.25 |

### EXAMPLE 12

Comparative Example B (100 g) was mixed with 40.920 grams of TiOSO₄·2H₂O (10 weight percent solids in deionized water) and 14.767 grams of SnCl₄·5H₂O (10 weight percent solids in deionized water). The resulting 10 weight percent coating solution contained TiOSO₄·2H₂O (26.0 weight percent of total solids) and SnCl₄·5H₂O (9.3 weight percent of total solids).

### EXAMPLE 13

Comparative Example B (100 g) was mixed with 40.920 grams of TiOSO₄·2H₂O (10 weight percent solids in deionized water) and 29.534 grams of SnCl₄·5H₂O (10 weight percent solids in deionized water). The resulting 10 weight percent coating solution contained TiOSO₄·2H₂O (23.8 weight percent of total solids) and SnCl₄·5H₂O (17.0 weight percent of total solids).

Examples 5, 12, and 13 were coated onto PET film using a #6 wire-wound coating rod and onto soda-lime glass slides using a dip coater at a drawing speed of 242.6 mm/min. All of the coated samples were heated at 120°C for 10 minutes. The coated samples were further coated with a methylene blue (MB) solution in deionized water (1 mg/mL) using a #6 wire-wound coating rod or dip coated, and dried at the room temperature.

The MB-coated samples were separately put into UV Chambers A and B for photocatalytic activity testing. The coated samples were taken out from the chambers for transmission measurement every 15 minutes for the samples in UV Chamber B and every one hour for the samples in UV Chamber A. The transmission changes of the coating samples after irradiation are reported in Tables 11 (using UV Chamber B) and 12 (using UV Chamber A). Results are reported in Tables 11-12. The results indicate that the tin/titanium-doped silica coatings have better photocatalytic performance than only titanium doped silica coatings.

**TABLE 11**

| EXAMPLE | SUBSTRATE | METAL COMPOUND, (weight percent of total metal compound + silica) | %T | | | Δ%T | |
|---|---|---|---|---|---|---|---|
| | | | Before irradiation | 15 min | 30 min | 15 min | 30 min |
| 5 | PET | TiOSO₄·2H₂O (28.8) | 83.35 | 84.15 | 84.50 | 0.80 | 1.15 |
| 12 | PET | TiOSO₄·2H₂O (26.0), SnCl₄•5H₂O (9.3) | 81.45 | 84.45 | 84.75 | 3.00 | 3.30 |
| 13 | PET | TiOSO₄·2H₂O (23.8), SnCl₄·5H₂O (17.0), | 83.00 | 84.80 | 85.45 | 1.80 | 2.45 |
| 5 | soda-lime glass | TiOSO₄·2H₂O (28.8) | 78.60 | 81.20 | 83.40 | 2.60 | 4.80 |
| 12 | soda-lime glass | TiOSO₄·2H₂O (26.0), SnCl₄•5H₂O (9.3) | 74.85 | 79.10 | 81.15 | 4.25 | 6.30 |
| 13 | soda-lime glass | TiOSO₄·2H₂O (23.8), SnCl₄·5H₂O (17.0) | 75.75 | 80.50 | 82.50 | 4.75 | 6.75 |

**TABLE 12**

| EXAMPLE | SUBSTRATE | METAL COMPOUND, (weight percent of total metal compound + silica) | %T | | | Δ%T | |
|---|---|---|---|---|---|---|---|
| | | | Before irradiation | 1 hr | 2 hrs | 1 hr | 2 hrs |
| 5 | PET | TiOSO₄·2H₂O (28.8) | 86.55 | 87.35 | 87.75 | 0.80 | 1.20 |
| 12 | PET | TiOSO₄·2H₂O (26.0), SnCl₄·5H₂O (9.3) | 80.70 | 82.15 | 82.85 | 1.45 | 2.15 |
| 13 | PET | TiOSO₄·2H₂O (23.8), SnCl₄·5H₂O (17.0) | 80.30 | 81.50 | 81.70 | 1.20 | 1.40 |

### TEST METHOD FOR X-RAY SCATTERING ANALYSIS

Reflection geometry data were collected in the form of a survey scan by use of a PANalytical Empyrean diffractometer, copper K_{α} radiation, and PIXcel detector registry of the scattered radiation. The diffractometer was fitted with variable incident beam slits and diffracted beam slits. The survey scan was conducted in a coupled continuous mode from 5 to 80 degrees (2θ) using a 0.04 degree step size and 1200 second dwell time. X-ray generator settings of 40 kV and 40 mA were employed.

### EXAMPLES 14-16 and COMPARATIVE EXAMPLE D

Examples 14-16 were prepared by coating metal-doped silica dispersions on soda-lime glass substrates (obtained from Brin Northwestern Glass Company, Minneapolis, Minnesota) using a #6 wire-wound coating rod (nominal wet coating thickness = 14 microns). The metal-doped colloidal silica dispersions were prepared by diluting NALCO 1115 silica sol to 10 weight percent solids with deionized water, acidifying the diluted silica sol with concentrated HNO₃ to a pH of about 2-3 and then adding a desired amount of aqueous metal compound solutions (10 weight percent SnCl₄·5H₂O, TiOSO₄·2H₂O, or Zn(NO₃)₂·6H₂O). The type and amount of metal cations added to the coating compositions for each of Examples 14-16 are summarized below in the Table 13. The coated samples were then dried at room temperature, and then further cured at 120 °C for 10 min. The final coated samples were optically clear and transparent. The powders for analysis were collected by scraping the coating off from glass substrates. The samples thus prepared were analyzed according to the *TEST METHOD FOR X-RAY SCATTERING ANALYSIS* described above and the results are reported below in Table 13.

Comparative Example D was prepared by coating silica dispersion on soda-lime glass substrates using a #6 wire-wound coating rod (nominal wet coating thickness = 14 microns). The silica dispersions were prepared by diluting NALCO 1115 silica sol to 10 weight percent solids with deionized water, and acidifying the diluted silica sol with concentrated HNO₃ to a pH of about 2-3. The coated samples were then dried at room temperature, and then further cured at 120 °C for 10 min. The final coated samples were optically clear and transparent. The powders were collected by scraping the coating off from glass substrates, and then mixed with a desired amount of solid TiOSO₄·2H₂O powder to have the same ratio of silica/metal compound as in Example 16.

**TABLE 13**

| EXAMPLE | ADDED METAL COMPOUND | AMOUNT OF ADDED METAL COMPOUND WEIGHT PERCENT OF TOTAL SOLIDS | PHASE PRESENT |
|---|---|---|---|
| 14 | SnCl₄·5H₂O | 5 | Amorphous (major) + cassiterite (SnO₂) trace |
| 15 | Zn(NO₃)₂·6H₂O | 5 | Amorphous |
| 16 | TiOSO₄·2H₂O | 5 | Amorphous |
| Comp. Ex. D | TiOSO₄·2H₂O | 5 | Amorphous (major) + Nitratine (NaNO₃, major) + Titanium Oxide Sulfate dehydrate (TiOSO₄•2H₂O, major) |

## Claims

1. A method of making a coatable composition, the method comprising:
providing a first composition comprising silica nanoparticles dispersed in an aqueous liquid vehicle, wherein the silica nanoparticles have an average particle size of less than or equal to 100 nanometers, wherein the first composition has a pH greater than 8;
acidifying the first composition to a pH of less than or equal to 4 using inorganic acid to provide a second composition; and
dissolving at least one metal compound in the second composition to form the coatable composition, wherein said at least one metal compound comprises a titanium compound.

2. The method of claim 1, wherein the at least one metal compound further comprises a zinc compound.

3. The method of claim 1, wherein the at least one metal compound further comprises a tin compound.

4. The method of claim 1, wherein the coatable composition is essentially free of organic non-volatile compounds.

5. The method of claim 1, wherein the first composition further comprises polymer particles dispersed in the aqueous liquid vehicle.

6. A method of making a photocatalytic article, the method comprising steps:
a) providing a first composition comprising silica nanoparticles dispersed in an aqueous liquid vehicle, wherein the silica nanoparticles have an average particle size of less than or equal to 100 nanometers, wherein the first composition has a pH greater than 8;
b) acidifying the composition to a pH of less than or equal to 4 using inorganic acid to provide a second composition; and
c) dissolving at least one compound of a metal in the second composition to provide a coatable composition, wherein said at least one metal compound comprises a titanium compound; and
d) coating a layer of the coatable composition onto a surface of a substrate; and
e) at least partially drying the coatable composition to provide a photocatalytic layer.

7. The method of claim 6, wherein the at least one metal compound further comprises a zinc compound.

8. The method of claim 6, wherein the at least one metal compound further comprises a tin compound.

9. The method of claim 6, wherein the coatable composition is essentially free of organic non-volatile compounds.

10. A photocatalytic composition comprising an amorphous silica matrix containing titanium cations, wherein the amorphous silica matrix comprises interconnected silica nanoparticles having a particle size distribution with an average particle size of less than or equal to 100 nanometers, wherein a majority of the titanium cations are individually disposed in the amorphous silica matrix, and wherein the titanium metal cations comprise from 0.2 to 40 mole percent of the total combined moles of silicon and titanium cations.

11. The photocatalytic composition of claim 10, wherein the amorphous silica matrix contain further contains metal cations selected from the group consisting of copper compounds, platinum compounds, zinc compounds, iron compounds, tin compounds, and combinations thereof.

12. The photocatalytic composition of claim 10, wherein the photocatalytic composition is essentially free of organic non-volatile compounds.

13. A photocatalytic article comprising a layer of an amorphous photocatalytic composition disposed on a surface of a substrate, wherein the amorphous photocatalytic composition comprises a silica matrix containing titanium cations, wherein the silica matrix comprises interconnected silica nanoparticles having a particle size distribution with an average particle size of less than or equal to 100 nanometers, wherein a majority of the titanium cations are individually disposed in the silica matrix, and wherein the titanium cations comprise from 0.2 to 40 mole percent of the total combined moles of silicon and titanium cations.

14. The photocatalytic article of claim 13, wherein the amorphous silica matrix contain further contains metal cations selected from the group consisting of copper compounds, platinum compounds, zinc compounds, iron compounds, tin compounds, and combinations thereof.

15. The photocatalytic article of claim 13, wherein the coatable composition is essentially free of organic non-volatile compounds.

## Patentansprüche

1. Verfahren zur Herstellung einer als Schicht auftragbaren Zusammensetzung, wobei das Verfahren Folgendes umfasst:
Bereitstellen einer ersten Zusammensetzung, umfassend in einem wässrigen flüssigen Hilfsstoff dispergierte Siliciumdioxid-Nanoteilchen, wobei die Siliciumdioxid-Nanoteilchen eine durchschnittliche Teilchengröße von weniger als oder gleich 100 Nanometer aufweisen, wobei die erste Zusammensetzung einen pH-Wert von größer als 8 aufweist;
Ansäuern der ersten Zusammensetzung auf einen pH-Wert von weniger als oder gleich 4 mittels anorganischer Säure, um eine zweite Zusammensetzung bereitzustellen; und
Auflösen von mindestens einer Metallverbindung in der zweiten Zusammensetzung unter Bildung der als Schicht auftragbaren Zusammensetzung, wobei die mindestens eine Metallverbindung eine Titanverbindung umfasst.

2. Verfahren nach Anspruch 1, wobei die mindestens eine Metallverbindung ferner eine Zinkverbindung umfasst.

3. Verfahren nach Anspruch 1, wobei die mindestens eine Metallverbindung ferner eine Zinnverbindung umfasst.

4. Verfahren nach Anspruch 1, wobei die als Schicht auftragbare Zusammensetzung im Wesentlichen frei von organischen nichtflüchtigen Verbindungen ist.

5. Verfahren nach Anspruch 1, wobei die erste Zusammensetzung ferner in dem wässrigen flüssigen Hilfsstoff dispergierte Polymerteilchen umfasst.

6. Verfahren zur Herstellung eines photokatalytischen Artikels, wobei das Verfahren die folgenden Schritte umfasst:
a) Bereitstellen einer ersten Zusammensetzung, umfassend in einem wässrigen flüssigen Hilfsstoff dispergierte Siliciumdioxid-Nanoteilchen, wobei die Siliciumdioxid-Nanoteilchen eine durchschnittliche Teilchengröße von weniger als oder gleich 100 Nanometer aufweisen, wobei die erste Zusammensetzung einen pH-Wert von größer als 8 aufweist;
b) Ansäuern der Zusammensetzung auf einen pH-Wert von weniger als oder gleich 4 unter Verwendung von anorganischer Säure, um eine zweite Zusammensetzung bereitzustellen; und
c) Auflösen von mindestens einer Metallverbindung in der zweiten Zusammensetzung, um eine als Schicht auftragbare Zusammensetzung bereitzustellen, wobei die mindestens eine Metallverbindung eine Titanverbindung umfasst; und
d) Beschichten einer Oberfläche eines Substrats mit einer Schicht der als Schicht auftragbaren Zusammensetzung; und
e) mindestens teilweises Härten der als Schicht auftragbaren Zusammensetzung, um eine photokatalytische Schicht bereitzustellen.

7. Verfahren nach Anspruch 6, wobei die mindestens eine Metallverbindung ferner eine Zinkverbindung umfasst.

8. Verfahren nach Anspruch 6, wobei die mindestens eine Metallverbindung ferner eine Zinnverbindung umfasst.

9. Verfahren nach Anspruch 6, wobei die als Schicht auftragbare Zusammensetzung im Wesentlichen frei von organischen nichtflüchtigen Verbindungen ist.

10. Photokatalytische Zusammensetzung, umfassend eine amorphe Siliciumdioxidmatrix, die Titankationen enthält, wobei die amorphe Siliciumdioxidmatrix untereinander verbundene Siliciumdioxid-Nanoteilchen mit einer Teilchengrößenverteilung mit einer durchschnittlichen Teilchengröße von weniger als oder gleich 100 Nanometer umfasst, wobei eine Mehrheit der Titankationen einzeln in der amorphen Siliciumdioxidmatrix angeordnet sind, und wobei die Titanmetallkationen von 0,2 bis 40 Mol-% der gesamten kombinierten Mole an Silicium- und Titankationen umfassen.

11. Photokatalytische Zusammensetzung nach Anspruch 10, wobei die amorphe Siliciumdioxidmatrix ferner Metallkationen enthält, die ausgewählt sind aus der Gruppe bestehend aus Kupferverbindungen, Platinverbindungen, Zinkverbindungen, Eisenverbindungen, Zinnverbindungen und Kombinationen davon.

12. Photokatalytische Zusammensetzung nach Anspruch 10, wobei die photokatalytische Zusammensetzung im Wesentlichen frei von organischen nichtflüchtigen Verbindungen ist.

13. Photokatalytischer Artikel, umfassend eine Schicht einer amorphen photokatalytischen Zusammensetzung, die auf einer Oberfläche eines Substrats angeordnet ist, wobei die amorphe photokatalytische Zusammensetzung eine Titankationen enthaltende Siliciumdioxidmatrix umfasst, wobei die Siliciumdioxidmatrix untereinander verbundene Siliciumdioxid-Nanoteilchen mit einer Teilchengrößenverteilung mit einer durchschnittlichen Teilchengröße von weniger als oder gleich 100 Nanometer umfasst, wobei eine Mehrheit der Titankationen einzeln in der amorphen Siliciumdioxidmatrix angeordnet sind, und wobei die Titanmetallkationen von 0,2 bis 40 Mol-% der gesamten kombinierten Mole an Silicium- und Titankationen umfassen.

14. Photokatalytischer Artikel nach Anspruch 13, wobei die amorphe Siliciumdioxidmatrix ferner Metallkationen enthält, die aus der Gruppe ausgewählt sind, bestehend aus Kupferverbindungen, Platinverbindungen, Zinkverbindungen, Eisenverbindungen, Zinnverbindungen und Kombinationen davon.

15. Photokatalytischer Artikel nach Anspruch 13, wobei die als Schicht auftragbare Zusammensetzung im Wesentlichen frei von organischen nichtflüchtigen Verbindungen ist.

## Revendications

1. Procédé de fabrication d'une composition pouvant être revêtue, le procédé comprenant :
la fourniture d'une première composition comprenant des nanoparticules de silice dispersées dans un véhicule liquide aqueux, dans lequel les nanoparticules de silice ont une taille moyenne de particules inférieure ou égale à 100 nanomètres, dans lequel la première composition a un pH supérieur à 8 ;
l'acidification de la première composition à un pH inférieur ou égal à 4 à l'aide d'un acide inorganique pour fournir une deuxième composition ; et
la dissolution dudit au moins un composé métallique dans la deuxième composition pour former la composition pouvant être revêtue, dans lequel ledit au moins un composé métallique comprend un composé de titane.

2. Procédé selon la revendication 1, dans lequel ledit au moins un composé métallique comprend en outre un composé de zinc.

3. Procédé selon la revendication 1, dans lequel ledit au moins un composé métallique comprend en outre un composé d'étain.

4. Procédé selon la revendication 1, dans lequel la composition pouvant être revêtue est pratiquement exempte de composés organiques non volatils.

5. Procédé selon la revendication 1, dans lequel la première composition comprend en outre des particules polymères dispersées dans le véhicule liquide aqueux.

6. Procédé de fabrication d'un article photocatalytique, le procédé comprenant les étapes suivantes :
a) la fourniture d'une première composition comprenant des nanoparticules de silice dispersées dans un véhicule liquide aqueux, dans lequel les nanoparticules de silice ont une taille moyenne de particules inférieure ou égale à 100 nanomètres, dans lequel la première composition a un pH supérieur à 8 ;
b) l'acidification de la première composition à un pH inférieur ou égal à 4 à l'aide d'un acide inorganique pour fournir une deuxième composition ; et
c) la dissolution d'au moins un composé d'un métal dans la deuxième composition pour fournir une composition pouvant être revêtue, dans lequel ledit au moins un composé métallique comprend un composé de titane ; et
d) le revêtement d'une couche de la composition pouvant être revêtue sur une surface d'un substrat ; et
e) le séchage au moins partiel de la composition pouvant être revêtue pour fournir une couche photocatalytique.

7. Procédé selon la revendication 6, dans lequel ledit au moins un composé métallique comprend en outre un composé de zinc.

8. Procédé selon la revendication 6, dans lequel ledit au moins un composé métallique comprend en outre un composé d'étain.

9. Procédé selon la revendication 6, dans lequel la composition pouvant être revêtue est pratiquement exempte de composés organiques non volatils.

10. Composition photocatalytique comprenant une matrice de silice amorphe contenant des cations titane, dans laquelle la matrice de silice amorphe comprend des nanoparticules de silice interconnectées possédant une distribution granulométrique avec une taille moyenne de particules inférieure ou égale à 100 nanomètres, dans laquelle une majorité des cations titane sont individuellement disposés dans la matrice de silice amorphe, et dans laquelle les cations métalliques de titane constituent de 0,2 à 40 pour cent molaires des moles totales combinées de silicium et de cations titane.

11. Composition photocatalytique selon la revendication 10, dans laquelle la matrice de silice amorphe contient en outre des cations métalliques choisis dans le groupe constitué de composés de cuivre, composés de platine, composés de zinc, composés de fer, composés d'étain, et des combinaisons de ceux-ci.

12. Composition photocatalytique selon la revendication 10, où la composition photocatalytique est pratiquement exempte de composés organiques non volatils.

13. Article photocatalytique comprenant une couche d'une composition photocatalytique amorphe disposée sur une surface d'un substrat, dans lequel la composition photocatalytique amorphe comprend une matrice de silice contenant des cations titane, dans lequel la matrice de silice comprend des nanoparticules de silice interconnectées possédant une distribution granulométrique avec une taille moyenne de particules inférieure ou égale à 100 nanomètres, dans lequel une majorité des cations titane sont disposés individuellement dans la matrice de silice, et dans lequel les cations titane constituent de 0,2 à 40 pour cent molaires des moles totales combinées de silicium et de cations titane.

14. Article photocatalytique selon la revendication 13, dans lequel la matrice de silice amorphe contient en outre des cations métalliques choisis dans le groupe constitué de composés de cuivre, composés de platine, composés de zinc, composés de fer, composés d'étain, et des combinaisons de ceux-ci.

15. Article photocatalytique selon la revendication 13, dans lequel la composition pouvant être revêtue est pratiquement exempte de composés organiques non volatils.
